# EUROPÄISCHE PATENTSCHRIFT

(11) **EP 2 721 586 B1**
(45) Veröffentlichungstag und Bekanntmachung des Hinweises auf die Patenterteilung: **01.04.2020**
(21) Anmeldenummer: 12724934.0
(22) Anmeldetag: 23.05.2012
(51) Int. Cl.: G07C 5/00

(54) **VERFAHREN UND SYSTEM ZUM AUTOMATISCHEN HERSTELLEN EINER KOMMUNIKATIONSVERBINDUNG MIT EINEM FAHRZEUG**
METHOD AND SYSTEM FOR AUTOMATICALLY ESTABLISHING A COMMUNICATION CONNECTION TO A VEHICLE
PROCÉDÉ ET SYSTÈME D'ÉTABLISSEMENT AUTOMATIQUE D'UNE LIAISON DE COMMUNICATION AVEC UN VÉHICULE

(30) Priorität: 16.06.2011 DE 102011077599
(43) Veröffentlichungstag der Anmeldung: 23.04.2014
(73) Patentinhaber: Robert Bosch GmbH, 70442 Stuttgart (DE)
(72) Erfinder: AMIRPOUR, Ramon, 73061 Ebersbach (DE); NOBIS, Guenter, 72622 Nuertingen (DE); MALMSHEIMER, Roger, 71573 Allmersbach Im Tal (DE)
(86) Internationale Anmeldenummer: PCT/EP2012/059580
(87) Internationale Veröffentlichungsnummer: WO 2012/171765

(56) Entgegenhaltungen:
- US-A- 6 094 609
- US-A1- 2008 275 819
- US-A1- 2009 281 687
- US-A1- 2010 082 569

## Beschreibung

Die Erfindung betrifft ein Verfahren und ein System zum automatischen Herstellen einer Kommunikationsverbindung mit einem Fahrzeug, insbesondere mit einem Fahrzeug mit angeschlossener mobiler Kommunikationsschnittstelle an Arbeitsplätzen einer Werkstatt.

### Stand der Technik

Die Druckschrift DE 10 2008 006 356 A1 offenbart ein Verfahren zum Orten der Parkposition eines Fahrzeugs, welchem ein RFID-Tag zugeordnet ist, über Auswertung von Funksignalen des RFID-Tags.

Die Druckschrift US 6,847,965 B2 offenbart ein Videosystem zur Nummernschilderkennung von Fahrzeugen und zum Abgleich erkannter Nummernschilder mit einer Datenbank gespeicherter Fahrzeugdaten.

Die technische Entwicklung der Kraftfahrzeugprüftechnik hat zu einer Vielzahl spezifischer externer Prüfgeräte für unterschiedliche Prüfgebiete und Kraftfahrzeugbestandteile geführt. Die dafür eingesetzten Fahrzeugprüfgeräte sind hochspezialisiert und an die entsprechenden Fahrzeugbestandteile angepasst. Häufig werden Fahrzeugprüfgeräte an speziellen Arbeitsplätzen in einer Werkstatt oder einer Prüfstelle eingesetzt, beispielsweise weil die Fahrzeugprüfgeräte fest in der Werkstatt installiert sind. Ein Fahrzeug, welches sich zur Fehlerdiagnose und/oder Reparatur in der Werkstatt befindet, wird dabei von Arbeitsplatz zu Arbeitsplatz bewegt, je nach vorzunehmender Prüfung bzw. Reparatur.

In heutigen Kraftfahrzeugen werden viele Funktionen durch elektronische Steuergeräte vorgenommen, die an die Fahrzeugelektronik angeschlossen sind. Die elektronischen Steuergeräte übernehmen dabei häufig auch Onboard-Diagnosefunktionen der Fahrzeugsysteme und speichern spezielle Diagnose- und/oder Betriebszustandsdaten. Damit die Daten der Diagnosefunktionen aus den Steuergeräten ausgewertet werden können, sind universelle Diagnosetester entwickelt worden, welche eine Kommunikation mit den im Fahrzeug befindlichen Steuergeräten ermöglichen. Die Funktionalität der Kommunikation kann sehr unterschiedlich sein und bezieht sich beispielsweise auf das Auslesen gespeicherter Fehlercodes, die Übertragung von Istwerten, das Durchführen komplexer Stellgliedtests, die Rückstellung der Serviceintervalle, das Anlernen eingebauter Ersatzteile und ähnlicher Aufgaben.

Diagnosetester umfassen dabei üblicherweise eine Baugruppe, die für die Kommunikation mit dem Fahrzeug verantwortlich ist. Diese Baugruppe wird meist als Fahrzeugkommunikationsschnittstelle oder wie international üblich als Vehicle Communication Interface, abgekürzt mit VCI, bezeichnet. Derartige VCI können auch in einem eigenen Gehäuse angeordnet sein, und drahtgebunden oder drahtlos mit universellen Bedien- und Anzeigegeräten wie beispielsweise Laptops, PDAs oder Smartphones kommunizieren. Die Diagnosefunktionalität universeller Diagnosetester oder Bedien- und Anzeigegeräte wird dabei über eine entsprechende Diagnosesoftware gewährleistet, welche die Bedienung, die Anzeige, die Diagnoseablaufsteuerung und die Kommunikation mit den elektronischen Steuergeräten über das VCI ermöglicht.

VCI können als mobile Kommunikationsschnittstellen ausgestaltet werden, die für die Dauer eines Werkstattaufenthalts einem spezifischen Fahrzeug zugeordnet werden können. Dazu kann eines einer Vielzahl von in einer Werkstatt verfügbaren mobilen Kommunikationsschnittstellen bei der Annahme des Fahrzeugs in der Werkstatt an das Fahrzeug angeschlossen werden und entsprechende Identifikationsdaten zu dem Fahrzeug in die mobile Kommunikationsschnittstelle eingespeichert werden. Beispielsweise können Fahrzeugtyp, Fahrzeugkennzeichen, Seriennummer, Kundendaten, Auftragsnummer und ähnliche fahrzeugspezifische Daten in der mobilen Kommunikationsschnittstelle abgelegt werden.

Derartige mobile Kommunikationsschnittstellen werden demnach mit dem Fahrzeug von Arbeitsplatz zu Arbeitsplatz mitgeführt und können dann innerhalb der Werkstatt an verschiedenen Arbeitsplätzen von den jeweiligen Fahrzeugprüfgeräten zur Kommunikation mit den in dem Fahrzeug verbauten Steuergeräten genutzt werden. Die Notwendigkeit einer aufwändigen Nachidentifikation des Fahrzeugs entfällt damit an jedem Arbeitsplatz, da die bislang ermittelten Identifikationsdaten aus der mobilen Kommunikationsschnittstelle in das Fahrzeugprüfgerät ausgelesen werden können.

Zur Initiierung der Kommunikation zwischen dem jeweiligen Fahrzeugsprüfgerät und einer mobilen Kommunikationsschnittstelle ist es jedoch notwendig, die jeweilige mobile Kommunikationsschnittstelle eindeutig zu identifizieren. Bislang muss ein Bediener eines Fahrzeugprüfgeräts zur Initialisierung der Kommunikation das vor ihm stehende Fahrzeug oder die dazugehörige Werkstattauftragsnummer auswählen. Gerade bei drahtloser Kommunikation zwischen den Fahrzeugprüfgeräten und den mobilen Kommunikationsschnittstellen kann es vorkommen, dass mehrere mobile Kommunikationsschnittstellen, welche unterschiedlichen Fahrzeugen in der Werkstatt zugeordnet sind, in Reichweite des Fahrzeugprüfgeräts sind. Der Bediener bzw. Werkstattmitarbeiter muss in diesem Fall aus einer Liste verfügbarer Fahrzeuge dasjenige Fahrzeug auswählen, welches dem korrekten Fahrzeug entspricht. Dabei können die mobilen Kommunikationsschnittstellen in Reichweite selbst den entsprechenden Listeneintrag veranlassen, oder ein zentraler Werkstattserver handhabt die Verwaltung aller mobiler Kommunikationsschnittstellen in der Werkstatt und aktualisiert die entsprechende Fahrzeugliste.

In jedem Fall muss der Werkstattmitarbeiter an seinem Arbeitsplatz das vor ihm stehende Fahrzeug selbst identifizieren, um eine korrekte manuelle Auswahl von der Liste aller verfügbarer mobiler Kommunikationsschnittstelle zu treffen. Eine solche manuelle Auswahl ist immer mit der Möglichkeit menschlichen Irrtums verbunden. Sollte sich der Mitarbeiter bei der Auswahl der mobilen Kommunikationsschnittstelle irren, würde eine Kommunikation zwischen dem Fahrzeugprüfgerät und einem anderen, nicht an dem Arbeitsplatz befindlichen Fahrzeug initiiert werden. Bis zum Erkennen des Fehlers könnten dabei beispielsweise falsche Diagnoseergebnisse generiert, nicht beabsichtigte Fahrzeugfunktionen an einem anderen Arbeitsplatz mit erheblichen Sicherheitsrisiken ausgelöst und überdies Verwirrung und Arbeitszeitverlust hervorgerufen werden.

Die US 2009/0281687 A1 offenbart ein Kommunikationssystem mit einem Fahrzeugdiagnosetool und einer Fahrzeugkommunikationsschnittstelle (VCI). Die VCI ist zur Verbindung mit einem Fahrzeugcomputersystem konfiguriert. Im Betrieb detektiert das Fahrzeugdiagnosetool automatisch, beispielsweise durch eine Multicast Abfrage, die Anwesenheit der VCI, wenn diese sich in der Nähe befindet. Anschließend kommunizieren VCI und Fahrzeugdiagnosetool schnurlos miteinander. Sind mehrere VCIs anwesend, dann können an einer Bedienoberfläche am Fahrzeugdiagnosetool die detektierten VCIs über eindeutige Identifikationsinformation angezeigt werden. Dies ermöglicht es dem Techniker eine der VCIs seitens des Benutzers manuell auszuwählen um mit ihr zu kommunizieren. Bei der eindeutigen Identifikationsinformation kann es sich beispielsweise um eine IP Adresse handeln.

Die US 2010/0082569 A1 offenbart ein System zur Benachrichtigung eines Service Providers über die Ankunft eines Fahrzeugs. Das System umfasst einen RFID Leser, der einen eindeutigen Fahrzeugcode bestimmt, der über ein RFID tag am ankommenden Fahrzeug befestigt ist. Der RFID Leser überträgt den eindeutigen Fahrzeugcode an ein Computersystem. Das Computersystem überträgt basierend auf dem eindeutigen Fahrzeugcode entsprechende Fahrzeuginformation zu einem entfernten Benutzergerät.

Es besteht daher ein Bedarf an Lösungen zur Vermeidung von Fehlern bei der Zuordnung von Fahrzeugen mit mobilen Kommunikationsschnittstellen zu Fahrzeugprüfgeräten während eines Werkstattdurchlaufs.

### Offenbarung der Erfindung

Die Erfindung beruht auf der Idee, Fahrzeuge innerhalb eines Werkstattablaufes automatisch anhand eineindeutiger Parameter zu lokalisieren und einzelnen Arbeitsplätzen in der Werkstatt zuzuordnen, um einen fehlerfreien Kommunikationsaufbau zwischen den an dem Arbeitsplatz befindlichen Prüf-, Diagnose-, Reparatur- und/oder Wartungsgeräten und einer dem Fahrzeug temporär zugeordneten mobilen Kommunikationsschnittstelle (VCI) zu ermöglichen. Die Identifikation eines Fahrzeugs kann dabei über einen automatischen Abgleich arbeitsplatzspezifischer Ortsinformationen mit Fahrzeugidentifikationsdaten erfolgen, die in der mobilen Kommunikationsschnittstelle gespeichert oder dem zu identifizierenden Fahrzeug selbst zuzuordnen sind. Das erfindungsgemäße Prinzip beruht auf einer Erfassung einer Fahrzeugidentifikation bei bekannter Positionsinformation oder einer Erfassung einer Positionsinformation bei bekannter Fahrzeugidentifikation. In jedem Fall kann eine eindeutige Zuordnung des an einem Werkstattarbeitsplatz befindlichen Fahrzeug zu der jeweils zugeordneten mobilen Kommunikationsschnittstelle automatisch getroffen werden. Mit den erfassten Informationen ist ein automatisches Herstellen einer Kommunikationsverbindung mit dem richtigen Fahrzeug jederzeit möglich. Dies vermeidet zum Einen Bedienfehler durch Werkstattmitarbeiter. Zum Anderen kann der Werkstattablauf beschleunigt werden, da die manuellen Arbeitsschritte zur Initiierung der Kommunikation zwischen Fahrzeugprüfgerät und mobiler Kommunikationsschnittstelle bzw. elektronischen Fahrzeugsteuergeräten durch den automatischen Identifikationsmechanismus entfallen.

Das erfindungsgemäße Verfahren zum automatischen Herstellen einer Kommunikationsverbindung mit einem Fahrzeug an einem Werkstattarbeitsplatz nach Anspruch 1 umfasst dabei die Schritte des Verbindens einer Vielzahl von mobilen Kommunikationsschnittstellen mit jeweils einem einer Vielzahl von Fahrzeugen, des Herstellens von eineindeutigen Zuordnungen der Fahrzeuge zu den jeweils mit ihnen verbundenen mobilen Kommunikationsschnittstellen, des automatischen Erfassens von Identifikationsdaten einer der Vielzahl der mobilen Kommunikationsschnittstellen und/oder des jeweils zugeordneten Fahrzeugs, welche sich an dem Werkstattarbeitsplatz befinden, oder des automatischen Erfassens von Positionskoordinaten der Vielzahl der mobilen Kommunikationsschnittstellen, des Übermittelns der Identifikationsdaten oder Positionskoordinaten an ein Fahrzeugprüfgerät an dem Werkstattarbeitsplatz, und des automatischen Herstellens einer Kommunikationsverbindung zwischen dem Fahrzeugprüfgerät und der sich an dem Werkstattarbeitsplatz befindlichen mobilen Kommunikationsschnittstelle auf der Basis der erfassten Identifikationsdaten oder der erfassten Positionskoordinaten.

Gemäß einer bevorzugten Ausführungsform ein Erfassen mindestens eines optisch erfassbaren Fahrzeugkennzeichens des an dem Werkstattarbeitsplatz befindlichen Fahrzeugs mithilfe eines an jedem Werkstattarbeitsplatz eingerichteten Videosystems erfolgen. Vorteilhafterweise kann über die eineindeutige Zuordnung von dem über das Fahrzeugkennzeichen ermittelten Fahrzeug auf die dem Fahrzeug zugeordnete mobile Kommunikationsschnittstelle zurückgeschlossen werden.

Gemäß einer weiteren bevorzugten Ausführungsform kann ein Erfassen von Identifikationsdaten eines in der mobilen Kommunikationsschnittstelle angeordneten RFID-Tags mithilfe eines RFID-Lesegeräts erfolgen. Damit kann vorteilhafterweise ein Zuordnen von Fahrzeugen und mobilen Kommunikationsschnittstellen entfallen, da jede der mobilen Kommunikationsschnittstellen bereits über ihre RFID-Nummer eineindeutig klassifiziert werden kann.

Gemäß einer weiteren bevorzugten Ausführungsform können Satellitennavigationsdaten der Vielzahl von mobilen Kommunikationsschnittstellen mithilfe von jeweils in den mobilen Kommunikationsschnittstellen angeordneten Satellitennavigationsempfängern erfasst werden. Dies bietet den Vorteil, dass keine eigene Infrastruktur von Erfassungseinrichtungen in der Werkstatt vorgesehen werden muss, sondern lediglich die mobilen Kommunikationsstellen mit Satellitennavigationsempfängern ausgestattet werden müssen.

Gemäß einer alternativen Ausführungsform können die Positionskoordinaten auch über ein funktechnisches Erfassen der Vielzahl von mobilen Kommunikationsschnittstellen mithilfe von jeweils in den mobilen Kommunikationsschnittstellen angeordneten Funksendern ermittelt werden.

Die vorliegende Erfindung schafft weiterhin ein System zum automatischen Herstellen einer Kommunikationsverbindung mit einem Fahrzeug an einem Werkstattarbeitsplatz nach Anspruch 7, mit einer Vielzahl von mobilen Kommunikationsschnittstellen, welche dazu ausgelegt sind, mit jeweils einem einer Vielzahl von Fahrzeugen in der Werkstatt verbunden zu werden, einer zentralen Softwarekomponente, welche dazu ausgelegt ist, eineindeutige Zuordnungen der Fahrzeuge zu den jeweils mit ihnen verbundenen mobilen Kommunikationsschnittstellen zu speichern, und einer Erfassungseinrichtung, welche dazu ausgelegt ist, Identifikationsdaten einer der Vielzahl der mobilen Kommunikationsschnittstellen und/oder des jeweils zugeordneten Fahrzeugs, welche sich an dem Werkstattarbeitsplatz befinden, automatisch zu erfassen, oder welche dazu ausgelegt ist, Positionskoordinaten der Vielzahl der mobilen Kommunikationsschnittstellen automatisch zu erfassen. Die Erfassungseinrichtung ist dabei weiterhin dazu ausgelegt, die Identifikationsdaten oder Positionskoordinaten an ein Fahrzeugprüfgerät an dem Werkstattarbeitsplatz zum automatischen Herstellen einer Kommunikationsverbindung zwischen dem Fahrzeugprüfgerät und der sich an dem Werkstattarbeitsplatz befindlichen mobilen Kommunikationsschnittstelle auf der Basis der erfassten Identifikationsdaten oder der erfassten Positionskoordinaten zu übermitteln.

Bevorzugte Weiterbildungen sind Gegenstand der jeweiligen Unteransprüche.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Weitere Merkmale und Vorteile von Ausführungsformen der Erfindung ergeben sich aus der nachfolgenden Beschreibung mit Bezug auf die beigefügten Zeichnungen.

Es zeigen:
- Fig. 1: eine schematische Darstellung eines Systems zum Identifizieren eines Fahrzeugs mit VCI an einem Werkstattarbeitsplatz gemäß einer Ausführungsform der Erfindung;
- Fig. 2: eine schematische Darstellung eines Systems zum Identifizieren eines Fahrzeugs mit VCI an einem Werkstattarbeitsplatz gemäß einer weiteren Ausführungsform der Erfindung;
- Fig. 3: eine schematische Darstellung eines Systems zum Identifizieren eines Fahrzeugs mit VCI an einem Werkstattarbeitsplatz gemäß einer weiteren Ausführungsform der Erfindung;
- Fig. 4: eine schematische Darstellung eines Systems zum Identifizieren eines Fahrzeugs mit VCI an einem Werkstattarbeitsplatz gemäß einer weiteren Ausführungsform der Erfindung;
- Fig. 5: eine schematische Darstellung eines Verfahrens zum Identifizieren eines Fahrzeugs mit VCI an einem Werkstattarbeitsplatz gemäß einer weiteren Ausführungsform der Erfindung;
- Fig. 6: eine schematische Darstellung eines Verfahrens zum Identifizieren eines Fahrzeugs mit VCI an einem Werkstattarbeitsplatz gemäß einer weiteren Ausführungsform der Erfindung; und
- Fig. 7: eine schematische Darstellung eines Verfahrens zum Identifizieren eines Fahrzeugs mit VCI an einem Werkstattarbeitsplatz gemäß einer weiteren Ausführungsform der Erfindung.

In den Figuren der Zeichnung sind gleiche und funktionsgleiche Elemente, Merkmale und Komponenten - sofern nichts Anderes ausgeführt ist - jeweils mit denselben Bezugszeichen versehen. Es versteht sich, dass Komponenten und Elemente in den Zeichnungen aus Gründen der Übersichtlichkeit und Verständlichkeit nicht notwendigerweise maßstabsgetreu zueinander wiedergegeben sind.

### Ausführliche Beschreibung der Erfindung

Fahrzeugprüfgeräte im Sinne dieser Anmeldung sind nicht auf spezielle Fahrzeugprüfgeräte festgelegt. Sie können beispielsweise Achsmessprüfgeräte, Motortester, Emissionsprüfgeräte, Bremsprüfgeräte, Stoßdämpferprüfgeräte, Spurprüfgeräte, Wiegeeinrichtungen, Bremsflüssigkeitsprüfgeräte, Schallpegelmesser, Dieselrauchgastester, Fahrwerksmessgeräte, Spurwinkelprüfgeräte, Lenkwinkeltester, Klimaanlagenprüfgeräte und dergleichen umfassen. Diese Fahrzeugprüfgeräte können in Werkstätten, insbesondere Kraftfahrzeugwerkstätten, Prüfstellen oder vergleichbaren Einrichtungen verwendet werden. Insbesondere sind die erfindungsgemäßen Verfahren und Vorrichtungen in diesen Einrichtungen gleichermaßen verwendbar.

Im Folgenden werden Kommunikationsschnittstellen für Fahrzeuge beschrieben, die im Sinne dieser Anmeldung als "vehicle communication interface", kurz VCI, bezeichnet werden. Insbesondere sind diese Kommunikationsschnittstellen mobile Schnittstellen, die mit dem Fahrzeug in einer Werkstatt von Arbeitsplatz zu Arbeitsplatz mitgeführt werden können.

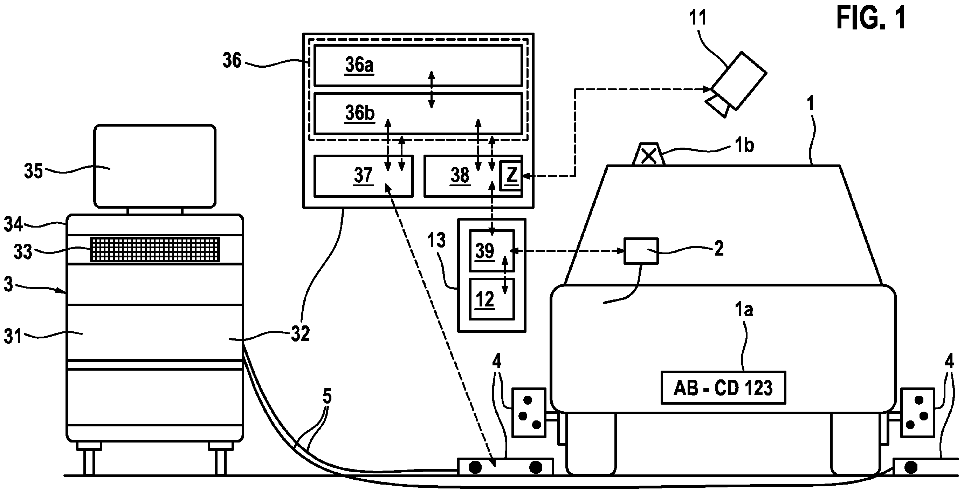

Fig. 1 zeigt eine schematische Darstellung eines Systems zum Identifizieren eines Fahrzeugs 1 mit VCI 2 an einem Werkstattarbeitsplatz gemäß einer Ausführungsform.

An einem Arbeitsplatz einer Werkstatt oder Prüfstelle befindet sich ein Fahrzeug 1, insbesondere ein Kraftfahrzeug, welches eines oder mehrere elektronische Steuergeräte umfassen kann. Das oder die elektronischen Steuergeräte können spezifische Steuergeräte für spezifische Fahrzeugkomponenten oder universelle elektronische Steuergeräte des Fahrzeugs 1 umfassen. Die elektronischen Steuergeräte können über eine nicht dargestellte standardisierte Fahrzeugschnittstelle Diagnosedaten, Fehlerdaten, Istwerte, Betriebszustandsdaten oder ähnliche fahrzeugrelevante Daten für spezifische Fahrzeugkomponenten bereithalten und in bestimmte Betriebszustände oder-abläufe versetzt werden.

Das oder die elektronischen Steuergeräte werden über eine nicht dargestellte standardisierte Fahrzeugschnittstelle mit einem VCI 2 verbunden. Das VCI 2 kann dabei zu Beginn eines Werkstattdurchlaufs, beispielsweise in der Fahrzeugannahme mit dem Fahrzeug 1 verbunden werden. Das VCI 2 kann dazu ausgelegt sein, Kenndaten des Fahrzeugs 1 zu speichern, beispielsweise Fahrzeughalter, amtliches Kennzeichen, Fahrzeugmarke, Fahrzeugfabrikat, Fahrgestellnummer oder ähnliche Identifikationsdaten. Die Kenndaten können dabei in der Fahrzeugannahme der Werkstatt mittels eines universellen Bedien- und Anzeigegerätes neu eingegeben oder von einem vorangegangenen Werkstattbesuch aus einer zentralen Werkstattdatenbank übernommen werden.

Das VCI 2 kann eines einer Vielzahl von in der Werkstatt verfügbaren VCI sein, die für eine Vielzahl von Fahrzeugen vorgesehen sind, die sich zur selben Zeit in der Werkstatt befinden. Dabei wird jedem der Fahrzeuge beispielsweise in der Fahrzeugannahme eines der VCI eineindeutig zugeordnet. Zum Beispiel wird bei Annahme des Fahrzeugs 1 in der Werkstatt eines der momentan nicht zugeordneten VCI ausgesucht und mit dem Fahrzeug 1 verbunden. Dann wird über Speicherung der Kenndaten des Fahrzeugs 1 das VCI 2 sozusagen "personalisiert", das heißt, es wird eine eineindeutige Zuordnung des VCI 2 zu dem Fahrzeug 1 vorgenommen. Diese Zuordnung kann temporär sein, das heißt, die Zuordnung gilt für die Dauer des Werkstattaufenthalts des Fahrzeugs 1, bis das VCI 2 nach Beendigung des Werkstattauftrags wieder von dem Fahrzeug 1 getrennt wird. Danach kann das entsprechende VCI 2 wieder einem anderen Fahrzeug für einen anderen Werkstattdurchlauf zugeordnet werden. Die jeweils gültige eineindeutige Zuordnung jedes der Vielzahl von VCI kann in einer zentralen Datenbank abgespeichert werden, wie weiter unten genauer erläutert.

Das VCI 2 ist dazu ausgelegt, mit dem Fahrzeug 1 in der Werkstatt mitgeführt zu werden, wenn das Fahrzeug 1 an verschiedene Arbeitsplätze der Werkstatt zu Wartungs-, Diagnose-, Reparatur- und/oder Prüfzwecken verbracht wird. Beispielhaft ist in Fig. 1 ein spezifisches Fahrzeugprüfgerät 3 eines solchen Werkstattarbeitsplatzes gezeigt. Das Fahrzeugprüfgerät 3 in Fig. 1 ist zum Beispiel ein Achsmessgerät 3, welches an einem Arbeitsplatz für Achsvermessung aufgebaut und fest installiert sein kann. Es ist jedoch klar, dass jedes andere Fahrzeugprüfgerät statt des Achsmessgeräts 3 ebenso verwendet werden kann, und das an anderen Arbeitsplätzen der Werkstatt vergleichbare Systeme und Vorrichtungen zum Identifizieren eines Fahrzeugs mit VCI verwendet werden können.

Das Achsmessgerät 3 umfasst ein Prüfmodul 4, einen Steuerrechner 31 mit Steuersoftware 32, eine Bedieneinrichtung 33 und eine Anzeigeeinrichtung 35. Der Steuerrechner 31, die Bedieneinrichtung 33 und die Anzeigeeinrichtung 35 können dabei in einem Gehäuse 34 angeordnet sein. Das Achsmessgerät 3 kann über Kabel, Sensoren, Schläuche und ähnliche geeignete Verbindungsmittel 5 mit dem Fahrzeug 1 bzw. mit Fahrzeugkomponenten des Fahrzeugs 1 wie beispielsweise dem Auspuff, dem Motor, der Klimaanlage, der Bremsanlage oder dergleichen verbunden sein. In der beispielhaften Ausführungsform der Fig. 1 sind Verbindungsmittel des Achsmessgeräts 3 mit dem Prüfmodul 4 verbunden, welches die eigentliche Achsvermessung vornehmen kann. Das Fahrzeugprüfgerät 3 kann beispielsweise in einem Fahrwagen untergebracht sein oder an dem Arbeitsplatz fest mit dem Werkstattboden verbunden sein.

Das Prüfmodul 4 kann allgemein ein spezifisches Fahrzeugprüfmodul aufweisen, welches vordefinierte Prüfungen oder Diagnose bezüglich bestimmter Fahrzeugkomponenten des Fahrzeugs 1 durchführen kann, beispielsweise Motortests, Fahrwerksvermessung, Klimaanlagenwartung oder ähnliches. Der Steuerrechner 31 kann dazu ausgelegt sein, die entsprechenden spezifischen Funktionen des Prüfmoduls 4 mithilfe der Steuersoftware 32 zu steuern.

Die Steuersoftware 32 ist in dem abgesetzten Kasten in Fig. 1 in größerem Detail gezeigt. Die Steuersoftware 32 umfasst eine Softwareschicht 36a zum Bedienen des Fahrzeugprüfgeräts 3 sowie zur Visualisierung der Prüfabläufe und -ergebnisse, eine Softwareschicht 36b zur Steuerung der Prüfabläufe, eine erste Kommunikationsschicht 37, die eine Kommunikation zwischen der Prüfablaufsteuerung durch die Softwareschicht 36b und dem Prüfmodul 4 herstellt, und eine zweite Kommunikationsschicht 38, die eine Kommunikation der Prüfablaufsteuerung durch die Softwareschicht 36b und einer Diagnoseservereinrichtung 39 herstellt. Die Diagnoseservereinrichtung 39 und deren Funktionsweise wird weiter unten genauer erläutert.

Die Softwareschichten 36a und 36b zur Bedienung, Anzeige und Prüfablaufsteuerung können auch in einer gemeinsamen Softwareschicht 36 integriert sein. Die zweite Kommunikationsschicht 38 kann eine Softwarekomponente zur Kommunikation mit dem Benutzer, eine Softwarekomponente zum Aufbau einer Kommunikation mit der Diagnoseservereinrichtung 39, eine Softwarekomponente für die Kommunikation der Prüfablaufsteuerung mit der Diagnoseservereinrichtung 39 während eines Prüfablaufs und/oder einen Prüfgeräte-Parametersatz aufweisen.

Die Kommunikationsschicht 38 kann zu Beginn eines Prüfablaufs in vorgelagerten Arbeitsschritten des Werkstattablaufs bereits gespeicherte Identifikationsdaten aus dem VCI 2 des Fahrzeugs 1 empfangen und an die Softwareschicht 36b zur Prüfablaufsteuerung weitergeben. Dadurch kann der Prüfablauf vorteilhafterweise automatisch an das Fahrzeug 1 angepasst werden. Weiterhin kann die Kommunikationsschicht 38 während des Prüfdurchlaufs Funktionen in elektronischen Steuergeräten des Fahrzeugs 1 ansteuern und Diagnosedaten während des Prüfdurchlaufs dynamisch von den elektronischen Steuergeräten des Fahrzeugs 1 an die Softwareschicht 36b weiterleiten.

Die Kommunikationsschicht 38 kann weiterhin vorteilhafterweise vorkonfigurierte Parameter des spezifischen Prüfmoduls 4 erhalten, um bestimmte Funktionen der elektronischen Steuergeräte des Fahrzeugs 1 gezielt zu aktivieren oder zu deaktivieren. Dadurch kann vorteilhafterweise der üblicherweise große Funktionalitätsumfang der elektronischen Steuergeräte auf die für den jeweiligen Prüfdurchlauf benötigten Funktionen heruntergebrochen werden, um Fehler bei der Bedienung des Fahrzeugprüfgeräts 3 durch den Benutzer zu vermeiden.

Bevor ein durch die Kommunikationsschicht 38 gesteuerter Prüfablauf jedoch erfolgen kann, muss eine Initialisierung der Kommunikation zwischen der Kommunikationsschicht 38 und dem Fahrzeug 1 erfolgen. Die Kommunikation wird über eine Diagnoseservereinrichtung 39 bereitgestellt, die ihrerseits mit der Kommunikationsschicht 38 und dem VCI 2 kommunizieren kann. Im Beispiel in Fig. 1 ist die Diagnoseservereinrichtung 39 auf einem zentralen Diagnoseserver 13 angeordnet, welcher in der Werkstatt zur zentralen Kommunikation, beispielsweise einer drahtlosen Kommunikation, mit allen sich momentan in der Werkstatt im Einsatz befindlichen VCI ausgelegt sein kann. Hierzu umfasst der Diagnoseserver 13 neben der Diagnoseservereinrichtung 39 eine zentrale Softwarekomponente 12, beispielsweise eine Datenbank, in der alle VCI, insbesondere auch das VCI 2, verwaltet werden können. Hierzu kann die zentrale Softwarekomponente 12 über einen Datenbestand verfügen, der die eineindeutige Zuordnung jedes der Vielzahl von VCI zu den entsprechenden Fahrzeugen abgespeichert ist, das heißt, in welchem angegeben ist, welches VCI momentan mit welchem Fahrzeug verbunden ist. Der Datenbestand kann hierbei in der Fahrzeugannahme der Werkstatt entsprechend der Verbindung der VCI mit den in der Werkstatt befindlichen Fahrzeugen aktualisiert werden. Beispielsweise ist in der zentralen Softwarekomponente 12 eine Zuordnung des VCI 2 zu dem Fahrzeug 1 abgelegt.

Es ist dabei nicht notwendig, dass die zentrale Softwarekomponente 12 in einem Diagnoseserver 13 vorgesehen ist, es kann auch möglich sein, lediglich eines der Fahrzeugprüfgeräte in einer Werkstatt, vorzugsweise ein Prüfgerät in der Fahrzeugannahme, mit der zentralen Softwarekomponente 12 auszustatten. Es kann weiterhin auch möglich sein, statt eines Fahrzeugprüfgeräts 3 ein universelles Bedien- und Anzeigegerät wie beispielsweise ein Laptop, ein PDA oder ein Smartphone mit der zentralen Softwarekomponente 12 zu versehen.

Das System umfasst eine Erfassungseinrichtung 11, beispielsweise eine Videokamera, eine Webcam oder eine ähnliche Vorrichtung, welche mindestens ein optisch erfassbares Fahrzeugmerkmale beispielsweise das Nummernschild 1a des Fahrzeugs 1 oder ein temporär angebrachtes Werkstattdurchlaufkennzeichen 1b des Fahrzeugs 1, welches sich gerade an dem Werkstattarbeitsplatz befindet, erfassen und auswerten kann. Die Erfassungseinrichtung 11 kann aus einem oder mehreren der erfassten Fahrzeugmerkmale 1a und 1b, beispielsweise über einen Merkmalerkennungsmechanismus, eindeutige Fahrzeugidentifikationsdaten über das Fahrzeug 1 gewinnen und es somit eineindeutig identifizieren. Die Erfassungseinrichtung 11 übermittelt die erfassten Identifikationsdaten an eine Softwarekomponente Z der Kommunikationsschicht 38 des Fahrzeugprüfgeräts 3, welche dann anhand der in der zentralen Softwarekomponente 12 des Diagnoseservers 13 gespeicherten eineindeutigen Zuordnungen das entsprechende dem Fahrzeug 1 momentan zugeordnete VCI 2 ermitteln kann. Auf diese Weise kann dasjenige VCI 2 ermittelt werden, zu dem die Diagnoseservereinrichtung 39 dann eine Kommunikationsverbindung aufbauen kann.

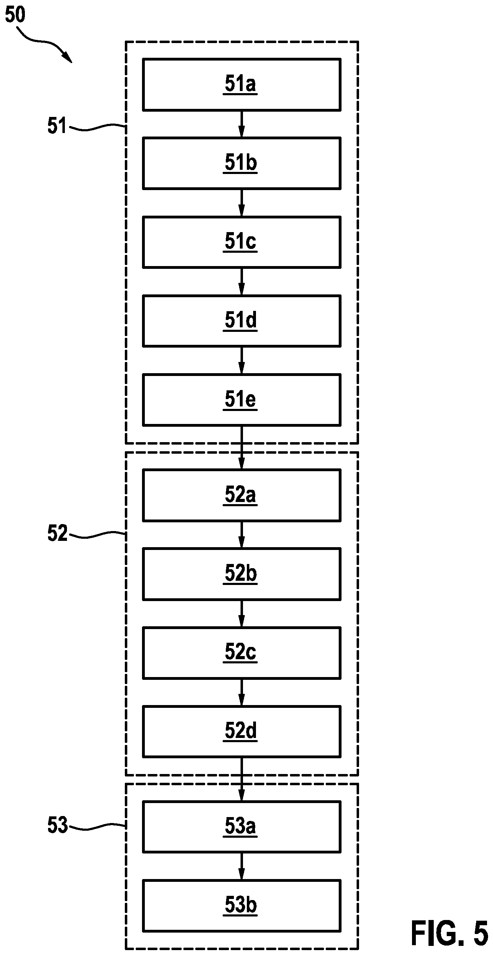

In Fig. 5 ist der schematische Ablauf eines Verfahrens 50 zum automatischen Herstellen einer Kommunikationsverbindung mit dem Fahrzeug 1 durch das in Fig. 1 dargestellte System gezeigt. Dabei sind die Schritte des Verfahrens, welche zu Beginn des Werkstattdurchlaufs, beispielsweise in der Fahrzeugannahme durchgeführt werden können, mit dem Bezugszeichen 51 gekennzeichnet, die Schritte, welche an jedem der unterschiedlichen Arbeitsplätze in der Werkstatt einheitlich durchgeführt werden können, mit dem Bezugszeichen 52 gekennzeichnet, und die Schritte, welche an jedem Arbeitsplatz je nach Bedarf ausgeführt werden können, mit dem Bezugszeichen 53 gekennzeichnet.

In einem ersten Schritt 51a erfolgt eine manuelle, eineindeutige Zuordnung eines VCI 2 zu einem Fahrzeug 1 und dessen einen oder mehreren optisch erfassbaren Fahrzeugmerkmalen, die für jedes einer Vielzahl von VCI in einer zentralen Softwarekomponente 12 gespeichert und aktualisiert werden kann (Schritt 51b). Das VCI 2 wird an das Fahrzeug 1 angeschlossen (Schritt 51c) und verbleibt für die Dauer des Werkstattaufenthalts in oder an dem Fahrzeug 1. Die erfassten Kenndaten des Fahrzeugs 1 können im VCI 2 gespeichert werden (Schritt 51d), und eine erste Identifikation des Fahrzeugs 1 für Prüf- oder Diagnoseabläufe kann im Rahmen einer Schnelldiagnose erfolgen (Schritt 51e).

Wenn ein Fahrzeug an einen Werkstattarbeitsplatz fährt (Schritt 52a), wird mithilfe der Erfassungseinrichtung 11 zunächst mindestens ein optisch erfassbares Fahrzeugmerkmals 1a, 1b des Fahrzeugs 1 erfasst und ausgewertet (Schritt 52b). Mit den so ermittelten optischen Identifikationsdaten des Fahrzeugs 1 wird in der zentralen Softwarekomponente 12 das dem Fahrzeug 1 zugeordnete VCI 2 identifiziert (Schritt 52c), so dass automatisch eine Kommunikationsverbindung zwischen dem Fahrzeugprüfgerät 3 und dem VCI 2 hergestellt werden kann (Schritt 52d).

Danach kann die Prüf- und Diagnosesoftware 32 automatisch auf die in dem VCI 2 gespeicherten Kenndaten und Identifikationsdaten für Prüf- oder Diagnoseabläufe selektiv zugreifen (Schritt 53a), so dass je nach durchzuführenden Arbeitsschritten an dem Werkstattarbeitsplatz eine Kommunikation zwischen der Prüf- und Diagnosesoftware 32 und den Steuergeräten in dem Fahrzeug 1 erfolgen kann (Schritt 53b).

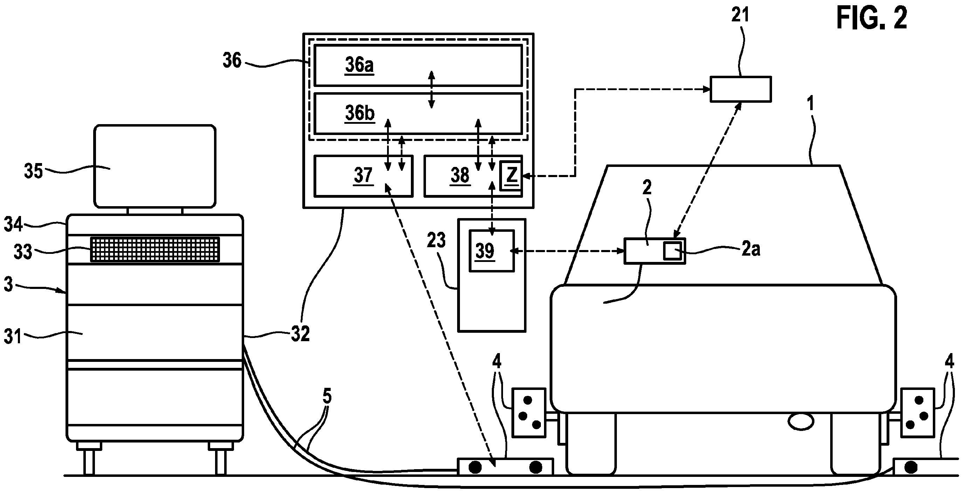

Fig. 2 zeigt eine schematische Darstellung eines Systems zum Identifizieren eines Fahrzeugs mit VCI an einem Arbeitsplatz in einer Werkstatt gemäß einer weiteren Ausführungsform. Dabei ist wie in Fig. 1 beispielhaft ein Fahrzeug 1 gezeigt, welches sich an einem Arbeitsplatz mit einem Fahrzeugsprüfgerät 3 befindet. Das Fahrzeug 1 ist dabei wie in Fig. 1 mit einem VCI 2 verbunden, über welche durch die Diagnoseservereinrichtung 39 eine Kommunikation mit dem Fahrzeug 1 aufgebaut werden kann.

Der Aufbau in Fig. 2 unterscheidet sich von dem Aufbau in Fig. 1 dadurch, dass das VCI 2 über eine drahtlose Identifikationseinheit 2a verfügt, beispielsweise einen RFID-Tag 2a. Der RFID-Tag 2a ist mit einer eineindeutigen Information versehen, welche den RFID-Tag 2a von anderen RFID-Tags eindeutig unterscheidet. Beispielsweise kann in dem RFID-Tag 2a eine Seriennummer des VCI 2, wie zum Beispiels eine MAC (Media Access Control)-Nummer abgelegt sein. Die bekannte Zuordnung der Informationen in dem RFID-Tag zu der Vielzahl von VCI in der Werkstatt ist in der Softwarekomponente Z in der Kommunikationsschicht 38 der Steuersoftware 32 jedes der Fahrzeugprüfgeräte, beispielsweise des Achsmessgerätes 3 abgelegt. Dadurch kann die Diagnoseservereinrichtung 39 in Fig. 2 in einem zentralen Diagnoseserver 23 angeordnet sein, welcher im Unterschied zu dem Diagnoseserver 13 in Fig. 1 nicht über eine weitere zentrale Softwarekomponente verfügen muss, weil eine zeitlich stabile Zuordnung von RFID-Tag und VCI gegeben ist.

Das System umfasst weiterhin eine drahtlose Erfassungseinrichtung 21, beispielsweise ein RFID-Lesegerät 21, welches den RFID-Tag 2a des an dem jeweiligen Werkstattarbeitsplatz befindlichen VCI 2 auslesen kann. Somit können Identifikationsdaten des RFID-Tags 2a ausgelesen und durch die Erfassungseinrichtung 21 an eine Softwarekomponente Z der Kommunikationsschicht 38 der Prüf- und Diagnosesoftware 32 übermittelt und mittels der darin gespeicherten eineindeutigen Zuordnungen der Identifikationsdaten zu der Vielzahl der in der Werkstatt vorhandenen VCI das entsprechende dem Fahrzeug 1 momentan zugeordnete VCI 2 ermittelt werden, so dass wie im System in Fig. 1 eine Kommunikationsverbindung zwischen dem Fahrzeugprüfgerät 3 und dem VCI 2 und den im Fahrzeug 1 vorhandenen Steuergeräten automatisch initiiert werden kann.

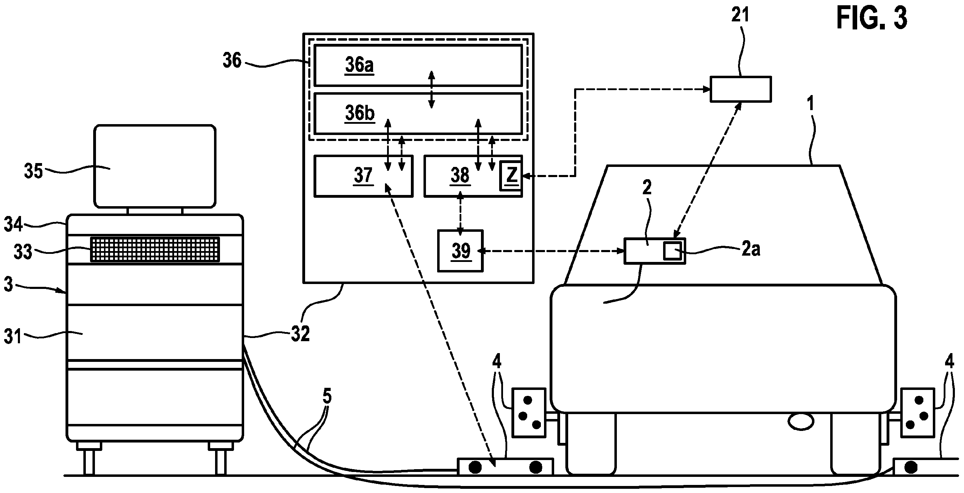

In Fig. 3 ist ein System zum Identifizieren eines Fahrzeugs mit VCI an einem Arbeitsplatz in einer Werkstatt gezeigt, welches sich von dem System nach Fig. 2 nur darin unterscheidet, dass die Diagnoseservereinrichtung 39 nicht in einem zentralen Diagnoseserver angeordnet ist, sondern Teil der jeweiligen Prüf- und Diagnosesoftware 32 des Fahrzeugprüfgeräts 3 ist. Damit kann eine Identifikation des Fahrzeugs 1 an jedem Arbeitsplatz lokal erfolgen, und ein zentraler Werkstattserver bzw. Diagnoseserver ist nicht zwingend erforderlich.

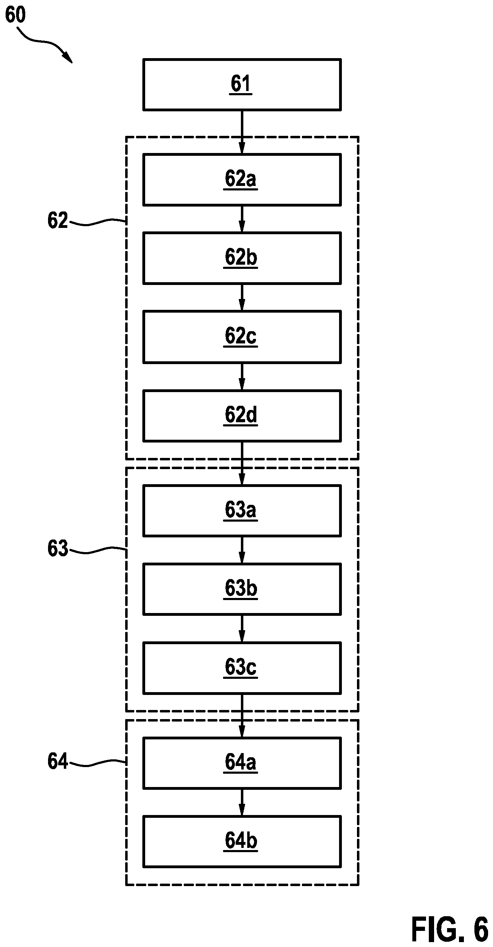

Fig. 6 zeigt einen schematischen Ablauf eines Verfahrens 60 zum automatischen Herstellen einer Kommunikationsverbindung mit dem Fahrzeug 1 durch das in Fig. 2 bzw. 3 dargestellte System. Dabei sind die Schritte des Verfahrens, welche zu Beginn des Werkstattdurchlaufs, beispielsweise in der Fahrzeugannahme durchgeführt werden können, mit dem Bezugszeichen 62 gekennzeichnet, die Schritte, welche an jedem der unterschiedlichen Arbeitsplätze in der Werkstatt einheitlich durchgeführt werden können, mit dem Bezugszeichen 63 gekennzeichnet, und die Schritte, welche an jedem Arbeitsplatz je nach Bedarf ausgeführt werden können, mit dem Bezugszeichen 64 gekennzeichnet.

In einem initialen vom Werkstattablauf unabhängigen Schritt 61 wird in jedem RFID-Tag 2a der Vielzahl der VCI 2 ein eindeutiges Identifikationsmerkmal gespeichert, beispielsweise eine MAC-Nummer. Die Information über die Zuordnung der Identifikationsmerkmale zu der Vielzahl von VCI in einer Werkstatt wird in der Softwarekomponente Z jedes der in der Werkstatt vorhandenen Fahrzeugprüfgeräte und universellen Bedien- und Anzeigegeräte gespeichert.

Die Schritte 62a bis 62d entsprechen den Schritten 51a sowie 51c bis 51e des in Fig. 5 gezeigten Verfahrens.

Wenn ein Fahrzeug an einen Werkstattarbeitsplatz fährt (Schritt 63a), wird mithilfe der Erfassungseinrichtung 21 zunächst der RFID-Tag 2a des VCI 2 des Fahrzeugs 1 erfasst und ausgewertet (Schritt 63b). Die so ermittelten Identifikationsdaten des Fahrzeugs 1 werden an das Fahrzeugprüfgerät 3 übermittelt, welches aufgrund der erfassten Identifikationsdaten des VCI 2 und der dort gespeicherten Information über die Zuordnung der Identifikationsmerkmale zu der Vielzahl von VCI automatisch eine Kommunikationsverbindung zwischen dem Fahrzeugprüfgerät 3 und dem VCI 2 herstellen kann (Schritt 63c).

Die Schritte 64a und 64b entsprechen dann wieder den Schritten 53a und 53b in Fig. 5.

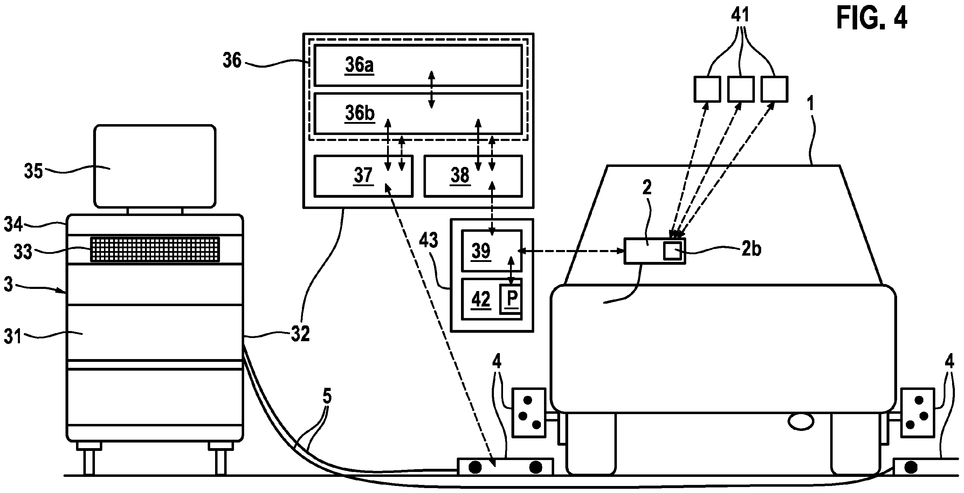

Fig. 4 zeigt eine schematische Darstellung eines Systems zum Identifizieren eines Fahrzeugs 1 mit VCI 2 an einem Werkstattarbeitsplatz gemäß einer weiteren Ausführungsform.

Das System in Fig. 4 unterscheidet sich von dem System in Fig. 1 darin, dass das VCI 2 einen Satellitennavigationsempfänger 2b oder einen Funksender 2b aufweist. Der Satellitennavigationsempfänger 2b kann beispielsweise einen GPS- oder GALILEO-Empfänger aufweisen, und der Funksender 2b kann beispielsweise eine WLAN-Einrichtung, eine Bluetooth-Einrichtung oder eine ähnliche Vorrichtung umfassen. Das System in Fig. 4 umfasst als Erfassungseinrichtung 41 weiterhin Satelliten eines Satellitennavigationssystems wie beispielsweise GPS oder GALILEO, oder mindestens einen Positionsbestimmungssensor, welcher innerhalb der Werkstattfläche angeordnet sein kann, und zum Beispiel durch Laufzeit- und/oder Feldstärkemessung mithilfe von Triangulations- oder Multilaterationsverfahren die Position des Funksenders 2b in der Werkstatt erfassen und berechnen kann.

Die mit Hilfe der Erfassungseinrichtung 41 erfassten Positionskoordinaten des Satellitennavigationsempfängers 2b oder Funksenders 2b können dem jeweiligen VCI eindeutig zugeordnet werden und an eine zentrale Softwarekomponente 42 eines Diagnoseservers 43 übermittelt werden. Die Übermittlung der Positionskoordinaten kann dabei im Falle eines Satellitennavigationsempfängers 2b, wie in Fig. 4 dargestellt, über das VCI 2 selbst erfolgen, da Positionskoordinaten in dem Satellitennavigationsempfänger 2b selbst ermittelt werden. Hingegen können im Falle eines Funksenders 2b die Positionskoordinaten in den Positionsbestimmungssensoren bestimmt, und von den Positionsbestimmungssensoren über eine (nicht in Fig. 4 dargestellte) Verbindung, beispielsweise eine drahtlose Verbindung, an die zentrale Softwarekomponente 42 übermittelt werden. Bei Verwendung eines Funksenders 2b kann es zudem möglich sein, zwischen verschiedenen VCI 2 in den Positionsbestimmungssensoren über eindeutige Kennungsmerkmale zu unterscheiden. Beispielsweise können verschiedene VCI 2 auf verschiedenen Funkfrequenzen senden, oder es können Identifikationscodierungen an die Positionsbestimmungssensoren übermittelt werden. Die zentrale Softwarekomponente 42 und der Diagnoseserver 43 unterscheiden sich von den jeweiligen Komponenten der Fig. 1 nur darin, dass die zentrale Softwarekomponente 42 ein Diskriminatormodell P aufweist, welches mithilfe von mathematischen Methoden die von der Erfassungseinrichtung 41 übermittelten Positionskoordinaten mit einer gespeicherten Abbildung der Werkstatt abgleicht, um eine Zuordnung der jeweiligen Positionskoordinaten zu einem der Arbeitsplätze der Werkstatt zu ermitteln. Damit kann in der zentralen Softwarekomponente 42 zu jedem Zeitpunkt berechnet werden, auf welchem Arbeitsplatz sich welches Fahrzeug 1 bzw. welches VCI 2 befindet. Wiederum kann mit den ermittelten Informationen automatisch eine Kommunikationsverbindung zwischen dem Fahrzeugprüfgerät 3 und dem VCI 2 und damit dem Fahrzeug 1 hergestellt werden.

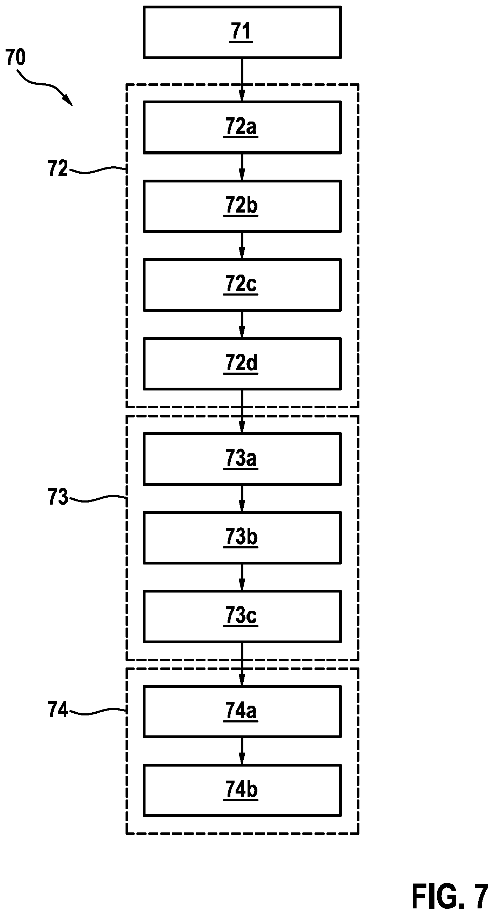

Fig. 7 zeigt einen schematischen Ablauf eines Verfahrens 70 zum automatischen Herstellen einer Kommunikationsverbindung mit dem Fahrzeug 1 durch das in Fig. 4 dargestellte System. Dabei sind die Schritte des Verfahrens, welche zu Beginn des Werkstattdurchlaufs, beispielsweise in der Fahrzeugannahme durchgeführt werden können, mit dem Bezugszeichen 72 gekennzeichnet, die Schritte, welche an jedem der unterschiedlichen Arbeitsplätze in der Werkstatt einheitlich durchgeführt werden können, mit dem Bezugszeichen 73 gekennzeichnet, und die Schritte, welche an jedem Arbeitsplatz je nach Bedarf ausgeführt werden können, mit dem Bezugszeichen 74 gekennzeichnet.

In einem initialen vom Werkstattablauf unabhängigen Schritt 71 wird ein zwei- oder dreidimensionales Abbild der Werkstatt mit den Koordinaten jedes Arbeitsplatzes mit geeigneten Mitteln erfasst und in der zentralen Softwarekomponente 42 so abgelegt, dass diese Information vom Diskriminatormodell P benutzt werden kann, so dass eine Zuordnung eines VCI oder Fahrzeugs zu einem Arbeitsplatz erfolgen kann.

Die Schritte 72a bis 72d entsprechen den Schritten 51a sowie 51c bis 51e des in Fig. 5 gezeigten Verfahrens.

Wenn ein Fahrzeug an einen Werkstattarbeitsplatz fährt (Schritt 73a), werden mithilfe der Erfassungseinrichtung 41 zunächst die Positionskoordinaten des Senders 2b des VCI 2 des Fahrzeugs 1 erfasst und ausgewertet (Schritt 73b). Die so ermittelten Positionsinformationen werden an das Fahrzeugprüfgerät 3 übermittelt, welches aufgrund der erfassten Positionsinformationen das entsprechende VCI 2 anhand eines Ortskoordinatenabgleichs mit Positionskoordinaten des Werkstattarbeitsplatzes automatisch eine Kommunikationsverbindung zwischen dem Fahrzeugprüfgerät 3 und dem VCI 2 herstellen kann (Schritt 73c).

Die Schritte 74a und 74b entsprechen dann wieder den Schritten 53a und 53b in Fig. 5.

## Patentansprüche

1. Verfahren zum automatischen Herstellen einer Kommunikationsverbindung mit einem Fahrzeug (1) an einem Werkstattarbeitsplatz, mit den Schritten:
Verbinden einer Vielzahl von mobilen Kommunikationsschnittstellen (2) mit jeweils einem einer Vielzahl von Fahrzeugen (1);
Herstellen von eineindeutigen Zuordnungen der Fahrzeuge (1) zu den jeweils mit ihnen verbundenen mobilen Kommunikationsschnittstellen (2);
Speichern der eineindeutigen Zuordnungen in einer zentralen Softwarekomponente (12; 42);
automatisches Erfassen von Identifikationsdaten einer der Vielzahl der mobilen Kommunikationsschnittstellen (2) und/oder des jeweils zugeordneten Fahrzeugs (1), welche bzw. welches sich an dem Werkstattarbeitsplatz befindet, oder automatisches Erfassen von Positionskoordinaten einer der Vielzahl der mobilen Kommunikationsschnittstellen (2), welche sich an dem Werkstattarbeitsplatz befindet;
Übermitteln der Identifikationsdaten oder Positionskoordinaten an ein Fahrzeugprüfgerät (3) an dem Werkstattarbeitsplatz;
Identifizieren der dem Fahrzeug (1) zugeordneten mobilen Kommunikationsschnittstelle (2) mittels der erfassten Identifikationsdaten oder der erfassten Positionskoordinaten in der zentralen Softwarekomponente (12; 42) und automatisches Herstellen einer Kommunikationsverbindung zwischen dem Fahrzeugprüfgerät (3) und der sich an dem Werkstattarbeitsplatz befindlichen auf der Basis der erfassten Identifikationsdaten oder der erfassten Positionskoordinaten identifizierten mobilen Kommunikationsschnittstelle (2).

2. Verfahren nach Anspruch 1, wobei der Schritt des Erfassens der Identifikationsdaten ein Erfassen eines oder mehrerer optisch erkennbarer Fahrzeugmerkmale, beispielsweise eines Fahrzeugkennzeichens (1a, 1b) des an dem Werkstattarbeitsplatz befindlichen Fahrzeugs (1) mithilfe eines Videosystems (11) umfasst.

3. Verfahren nach Anspruch 2, weiterhin mit dem Schritt:
Ermitteln der dem an dem Werkstattarbeitsplatz befindlichen Fahrzeug (1) zugeordneten mobilen Kommunikationsschnittstelle (2) auf der Basis des erfassten Fahrzeugmerkmals (1a, 1b) und der eineindeutigen Zuordnungen.

4. Verfahren nach Anspruch 1, wobei der Schritt des Erfassens der Identifikationsdaten ein Erfassen von Identifikationsdaten eines in der mobilen Kommunikationsschnittstelle (2) angeordneten RFID-Tags (2a) mithilfe eines RFID-Lesegeräts (21) umfasst.

5. Verfahren nach Anspruch 1, wobei der Schritt des Erfassens der Positionskoordinaten ein Erfassen von Satellitennavigationsdaten der Vielzahl von mobilen Kommunikationsschnittstellen (2) mithilfe von jeweils in den mobilen Kommunikationsschnittstellen (2) angeordneten Satellitennavigationsempfängern (2b) umfasst.

6. Verfahren nach Anspruch 1, wobei der Schritt des Erfassens der Positionskoordinaten ein funktechnisches Erfassen von Ortsinformationen der Vielzahl von mobilen Kommunikationsschnittstellen (2) mithilfe von jeweils in den mobilen Kommunikationsschnittstellen (2) angeordneten Funksendern (2b) umfasst.

7. System zum automatischen Herstellen einer Kommunikationsverbindung mit einem Fahrzeug (1) an einem Werkstattarbeitsplatz, mit:
einer Vielzahl von mobilen Kommunikationsschnittstellen (2), welche dazu ausgelegt sind, mit jeweils einem einer Vielzahl von Fahrzeugen (1) in der Werkstatt verbunden zu werden;
einer zentralen Softwarekomponente (12; 42), welche dazu ausgelegt ist, eineindeutige Zuordnungen der Fahrzeuge (1) zu den jeweils mit ihnen verbundenen mobilen Kommunikationsschnittstellen (2) zu speichern; und
einer Erfassungseinrichtung (11; 21; 41), welche dazu ausgelegt ist,
Identifikationsdaten einer der Vielzahl der mobilen Kommunikationsschnittstellen (2) und/oder des jeweils zugeordneten Fahrzeugs (1), welche bzw. welches sich an dem Werkstattarbeitsplatz befindet, automatisch zu erfassen, oder welche dazu ausgelegt ist, Positionskoordinaten einer der Vielzahl der mobilen Kommunikationsschnittstellen (2), welche sich an dem Werkstattarbeitsplatz befindet, automatisch zu erfassen,
wobei die Erfassungseinrichtung (11; 21; 41) weiterhin dazu ausgelegt ist, die Identifikationsdaten oder Positionskoordinaten an ein Fahrzeugprüfgerät (3) an dem Werkstattarbeitsplatz zu übermitteln,
wobei die zentrale Softwarekomponente (12;42) dazu ausgelegt ist, die dem Fahrzeug (1) zugeordnete mobile Kommunikationsschnittstelle (2) mittels der erfassten Identifikationsdaten oder der erfassten Positionskoordinaten zu identifzieren und
wobei das Fahrzeugprüfgerät (3) automatisch eine Kommunikationsverbindung zu der sich an dem Werkstattarbeitsplatz befindlichen auf der Basis der erfassten Identifikationsdaten oder der erfassten Positionskoordinaten identifizierten mobilen Kommunikationsschnittstelle (2) herstellt.

8. System nach Anspruch 7, wobei die Erfassungseinrichtung (11) eine Videokamera ist, welche dazu ausgelegt ist, Daten von Fahrzeugkennzeichen (1a, 1b) automatisch zu erfassen.

9. System nach Anspruch 7, wobei jede der Vielzahl der mobilen Kommunikationsschnittstellen (2) einen eindeutig gekennzeichneten RFID-Tag (2a) umfasst, und wobei die Erfassungseinrichtung (21) ein RFID-Lesegerät ist.

10. System nach Anspruch 7, wobei jede der Vielzahl der mobilen Kommunikationsschnittstellen (2) einen eindeutig gekennzeichneten Funksender (2b) umfasst, und wobei die Erfassungseinrichtung (41) mindestens einen Positionsbestimmungssensor umfasst, welcher dazu ausgelegt ist, eine Positionsbestimmung jeder der Vielzahl der mobilen Kommunikationsschnittstellen (2) mithilfe der durch die jeweiligen Funksender (2b) ausgesendeten Funksignale zu bestimmen.

## Claims

1. Method for automatically making a communication connection to a vehicle (1) at a garage workstation, having the steps of:
connecting a multiplicity of mobile communication interfaces (2) to a respective one of a multiplicity of vehicles (1);
making unique associations between the vehicles (1) and the respective mobile communication interfaces (2) connected to them;
storing the unique associations in a central software component (12; 42);
automatically capturing identification data of one of the multiplicity of the mobile communication interfaces (2) and/or of the respectively associated vehicle (1), which communication interface or which vehicle is at the garage workstation, or
automatically capturing position co-ordinates of one of the multiplicity of the mobile communication interfaces (2) that is at the garage workstation;
transmitting the identification data or position co-ordinates to a vehicle tester (3) at the garage workstation;
identifying the mobile communication interface associated with the vehicle (1) by means of the captured identification data or the captured position co-ordinates in the central software component (12; 42) and
automatically making a communication connection between the vehicle tester (3) and the mobile communication interface (2) that is at the garage workstation and has been identified on the basis of the captured identification data or the captured position co-ordinates.

2. Method according to Claim 1, wherein the step of capturing the identification data comprises capturing one or more visually discernible vehicle features, for example a vehicle registration number (1a, 1b), of the vehicle (1) that is at the garage workstation using a video system (11).

3. Method according to Claim 2, furthermore having the step of:
ascertaining the mobile communication interface (2) associated with the vehicle (1) that is at the garage workstation on the basis of the captured vehicle feature (1a, 1b) and the unique associations.

4. Method according to Claim 1, wherein the step of capturing the identification data comprises capturing identification data of an RFID tag (2a) arranged in the mobile communication interface (2) using an RFID reader (21) .

5. Method according to Claim 1, wherein the step of capturing the position co-ordinates comprises capturing satellite navigation data of the multiplicity of mobile communication interfaces (2) using satellite navigation receivers (2b) respectively arranged in the mobile communication interfaces (2).

6. Method according to Claim 1, wherein the step of capturing the position co-ordinates comprises capturing location information of the multiplicity of mobile communication interfaces (2) by radio using radio transmitters (2b) respectively arranged in the mobile communication interfaces (2).

7. System for automatically making a communication connection to a vehicle (1) at a garage workstation, having:
a multiplicity of mobile communication interfaces (2) designed to be connected to a respective one of a multiplicity of vehicles (1) in the garage;
a central software component (12; 42) designed to store unique associations between the vehicles (1) and the mobile communication interfaces (2) respectively connected to them; and
a capture device (11; 21; 41) designed to automatically capture identification data of one of the multiplicity of the mobile communication interfaces (2) and/or of the respectively associated vehicle (1), which communication interface or which vehicle is at the garage workstation, or designed to automatically capture position co-ordinates of one of the multiplicity of the mobile communication interfaces (2) that is at the garage workstation,
wherein the capture device (11; 21; 41) is furthermore designed to transmit the identification data or position co-ordinates to a vehicle tester (3) at the garage workstation,
wherein the central software component (12; 42) is designed to identify the mobile communication interface (2) associated with the vehicle (1) by means of the captured identification data or the captured position co-ordinates and wherein the vehicle tester (3) automatically makes a communication connection to the mobile communication interface (2) that is at the garage workstation and has been identified on the basis of the captured identification data or the captured position co-ordinates.

8. System according to Claim 7, wherein the capture device (11) is a video camera designed to automatically capture data from vehicle registration numbers (1a, 1b).

9. System according to Claim 7, wherein each of the multiplicity of the mobile communication interfaces (2) comprises an explicitly denoted RFID tag (2a), and wherein the capture device (21) is an RFID reader.

10. System according to Claim 7, wherein each of the multiplicity of the mobile communication interfaces (2) comprises an explicitly denoted radio transmitter (2b), and wherein the capture device (41) comprises at least one position determination sensor designed to determine a position determination for each of the multiplicity of the mobile communication interfaces (2) using the radio signals transmitted by the respective radio transmitters (2b) .

## Revendications

1. Procédé d'établissement automatique d'une liaison de communication avec un véhicule (1) à un poste de travail en atelier, ledit procédé comprenant les étapes suivantes :
relier une multitude d'interfaces de communication mobiles (2) respectivement à une multitude de véhicules (1) ;
établir des associations biunivoques entre des véhicules (1) et des interfaces de communication mobiles (2) qui sont reliées à ceux-ci ;
mémoriser les associations biunivoques dans un composant logiciel central (12 ; 42) ;
détecter automatiquement des données d'identification d'une interface de la multitude d'interfaces de communication mobiles (2) et/ou du véhicule (1) respectivement associé, laquelle ou lequel est situé(e) au poste de travail en atelier, ou
détecter automatiquement des coordonnées de position d'une interface de la multitude d'interfaces de communication mobiles (2), laquelle est située au poste de travail en atelier ;
transmettre les données d'identification ou les coordonnées de position à un dispositif de test de véhicule (3) au poste de travail en atelier ;
identifier l'interface de communication mobile (2), associée au véhicule (1), au moyen des données d'identification détectées ou des coordonnées de position détectées dans le composant logiciel central (12 ; 42) et
établir automatiquement une liaison de communication entre le dispositif de test de véhicule (3) et l'interface de communication mobile (2) située au poste de travail en atelier et identifiée sur la base des données d'identification détectées ou des coordonnées de position détectées.

2. Procédé selon la revendication 1, l'étape de détection des données d'identification comprenant la détection d'au moins une caractéristique de véhicule reconnaissable optiquement, par exemple un numéro d'immatriculation (1a, 1b) du véhicule (1) situé au poste de travail en atelier à l'aide d'un système vidéo (11).

3. Procédé selon la revendication 2, comprenant en outre l'étape de détermination de l'interface de communication mobile (2), associée au véhicule (1) situé au poste de travail en atelier, sur la base de la caractéristique de véhicule détectée (1a, 1b) et des associations biunivoques.

4. Procédé selon la revendication 1, l'étape de détection des données d'identification comprenant la détection de données d'identification d'une étiquette RFID (2a), disposée dans l'interface de communication mobile (2), à l'aide d'un lecteur RFID (21).

5. Procédé selon la revendication 1, l'étape de détection des coordonnées de position comprenant la détection de données de navigation par satellite de la multitude d'interfaces de communication mobiles (2) à l'aide de récepteurs de navigation par satellite (2b) respectivement disposés dans les interfaces de communication mobiles (2).

6. Procédé selon la revendication 1, l'étape de détection des coordonnées de position comprenant la détection radiotechnique d'informations de localisation de la multitude d'interfaces de communication mobiles (2) à l'aide d'émetteurs radio (2b) respectivement disposés dans les interfaces de communication mobiles (2) .

7. Système d'établissement automatique d'une liaison de communication avec un véhicule (1) au poste de travail en atelier, ledit système comprenant :
une multitude d'interfaces de communication mobiles (2) qui sont conçues pour être chacune reliées à un véhicule d'une multitude de véhicules (1) en atelier ;
un composant logiciel central (12 ; 42) qui est conçu pour mémoriser des associations biunivoques entre des véhicules (1) et des interfaces de communication mobiles (2) qui sont reliées à ceux-ci ; et
un moyen de détection (11 ; 21 ; 41) qui est conçu pour détecter automatiquement des données d'identification d'une interface de la multitude d'interfaces de communication mobiles (2) et/ou du véhicule (1) respectivement associé, laquelle ou lequel est situé(e) au poste de travail en atelier, ou qui est conçu pour détecter automatiquement des coordonnées de position d'une interface de la multitude d'interfaces de communication mobiles (2) situées au poste de travail en atelier, le moyen de détection (11 ; 21 ; 41) étant en outre conçu pour transmettre les données d'identification ou les coordonnées de position à un dispositif de test de véhicule (3) au poste de travail en atelier,
le composant logiciel central (12 ; 42) étant conçu pour identifier l'interface de communication mobile (2), associée au véhicule (1), au moyen des données d'identification détectées ou des coordonnées de position détectées, et le dispositif de test de véhicule (3) établissant automatiquement une liaison de communication avec l'interface de communication mobile située au poste de travail en atelier (2) et identifiée sur la base des données d'identification détectées ou des coordonnées de position détectées.

8. Système selon la revendication 7, le moyen de détection (11) étant une caméra vidéo qui est conçue pour détecter automatiquement des données de plaques d'immatriculation de véhicules (1a, 1b).

9. Système selon la revendication 7, chaque interface de la multitude d'interfaces de communication mobiles (2) comprenant une étiquette RFID (2a) **caractérisée** de manière univoque et le moyen de détection (21) étant un lecteur RFID.

10. Système selon la revendication 7, chaque interface de la multitude d'interfaces de communication mobiles (2) comprenant un émetteur radio (2b) caractérisé de manière univoque et le moyen de détection (41) comprenant au moins un capteur de détermination de position qui est conçu pour déterminer une détermination de position de chaque interface de la multitude d'interfaces de communication mobiles (2) à l'aide des signaux radio émis par les émetteurs radio respectifs (2b).
